(19) **Europäisches Patentamt**

**European Patent Office**

**Office européen des brevets**

(11) **EP 1 050 989 A2**

(12) **EUROPEAN PATENT APPLICATION**

(43) Date of publication:
**08.11.2000 Bulletin 2000/45**

(51) Int. Cl.[7]: **H04L 1/00**

(21) Application number: **00109101.6**

(22) Date of filing: **04.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **05.05.1999 US 132638 P**
**31.03.2000 US 539550**

(71) Applicant:
**Texas Instruments Incorporated**
**Dallas, Texas 75251 (US)**

(72) Inventors:
- **Gutierrez, Alberto Jr. (nmi)**
 **Plano, Texas 75025 (US)**
- **Lee, Yuan Kang**
 **Richardson, Texas 75080 (US)**
- **Mandyam, Giridhar D.**
 **Dallas, Texas 75252 (US)**

(74) Representative:
**Schwepfinger, Karl-Heinz, Dipl.-Ing.**
**Prinz & Partner GbR**
**Manzingerweg 7**
**81241 München (DE)**

(54) **MAP rate detection for variable rate CODECs**

(57) In a digital signal processor ("DSP") system, a method for determining the data rate of encoded data, wherein the encoded data may have one of a plurality of data rates. Signals in which the encoded data is encoded are detected, and represented as digital values for an observable parameter of the detected signals determined at each of a continuing sequence of times. Instructions are provided implementing a set of likelihood functions for the encoded data, each one in the set corresponding to one of the plurality of data rates, wherein the probabilities for the occurrence of the encoded data at the one of the plurality of data rates are provided using a predetermined estimated hypothesis for the occurrence of the observable variable. The DSP is used to execute the instructions, using the digital values as data for the instructions, to determine a data rate for the encoded data.

FIG. 1

**Description**

Technical Field of the Invention

This invention relates to rate detection algorithms for variable rate coded data, and more particularly relates to a MAP/likelihood rate detection algorithm for such coded data.

Background of the Invention

Currently, many speech coder/decoder units ("CODECs") transmit speech information at variable rates, depending on the speech activity. Examples of such CODECs are QCELP 13, QCELP 8 and the Enhanced Variable Rate Coder ("EVRC"), which are CODECs used for the IS-95 CDMA (Code Division Multiple Access System) wireless communications standard. Each of these CODECs transmits the encoded speech information at one of four rates, depending on the speech activity, where lower rates are used for correspondingly lower speech activity.

The problem is that the decoder portion of such CODECs typically does not receive explicit information indicating the rate of the coded source data, for example in the IS-95 standard. Therefore, the decoder must either guess at the rate prior to decoding, or decode the source information several times corresponding to each rate, and then make a final selection after decoding.

The former approach consists of assuming the frame structure for each rate, and deriving statistics from which a rate decision can be made prior to decoding of the data. Such approach, unfortunately, does not guarantee optimality, and it also requires setting thresholds depending on the signal-to-noise ratio ("SNR").

The latter approach requires decoding of the received data for each rate (i.e., one output stream for each possible rate), followed by choosing the most likely rate. This method, although the more optimum method, can be computationally expensive due to decoding of each source rate. Attempts have been made to reduce the computational complexity by first decoding the source rate that is most likely, and if that rate is not determined to be correct, proceeding to the next most likely rate, etc. However, this latter approach of multiple decoding with subsequent decision still requires the use of multiple hardware decoders, which is expensive in integrated circuit real estate, or multiple decoding passes in software implementations, which creates great demands on the processing power.

Note that while the problem discussed above is identified in terms of the IS-95 CODECs, it is not confined to IS-95. It arises in many other settings, as well, being a generic problem.

Accordingly, there is a need for an improved rate detection algorithm for application prior to decoding by the CODEC, that avoids the aforementioned problems. Specifically, there is a need for a rate detection algorithm that operates quickly and without the need for excessive multiplication of decoder circuitry.

Summary of the Invention

The present invention provides in an electronic system, a method for determining the data rate of blocks of encoded data, wherein each block of the encoded data may have one of a plurality of data rates. When received, the encoded signals are represented as digital values, thereby representing an observation variable from which the data rate of the encoded data is detected for each block of encoded data. Instructions are provided for deriving a set of likelihood functions from the observation variable, each one in the set corresponding to a hypothesis wherein each hypothesis represents one of the possible data rates, and wherein the likelihood functions are related to the occurrence of each of the hypotheses.

The present invention may be implemented as instructions for execution in a digital signal processor ("DSP") system, Alternatively, some or all of the algorithms may be implemented as hard wired circuitry in an integrated circuit.

The present invention thus provides a significantly simplified approach as compared with the prior art that nonetheless provides impressive capability for encoded data rate determination, using algorithms that may be implemented on conventional, general purpose DSPs. The present invention thus provides an efficient MAP/Likelihood method that requires no assumption of channel state information, and thus does not require decoding of all rates prior to rate selection. Given that no channel state information is assumed, the present invention provides an optimal rate detector. This is in contrast to the above-described heuristically derived prior art approach, which does not guarantee optimality in a formal sense.

The present invention balances strict optimality for impressive reductions in computational complexity, while still providing optimality in the maximum a posteriori or maximum likelihood sense, given that no channel state information is assumed.

These and other features of the invention will be apparent to those skilled in the art from the following detailed description of the invention, taken together with the accompanying drawings.

Brief Description of the Drawings

Fig. 1 is a block diagram of a CDMA receiver, in which a DSP is used to implement some algorithms.

Fig. 2 is a block diagram of an IS-95 encoder, in which an 8 Kbps (9.6 Kbps peak channel data rate when overhead bits are included) variable rate CODEC is used.

Fig. 3 is a block diagram of an IS-95 encoder, in which a 13 Kbps variable rate (14.4 Kbps peak channel data rate when overhead bits are included) CODEC is used.

Fig. 4 is a timing diagram of four 13 Kbps variable rate CODEC data streams, each having different data rates.

Detailed Description of the Preferred Embodiment

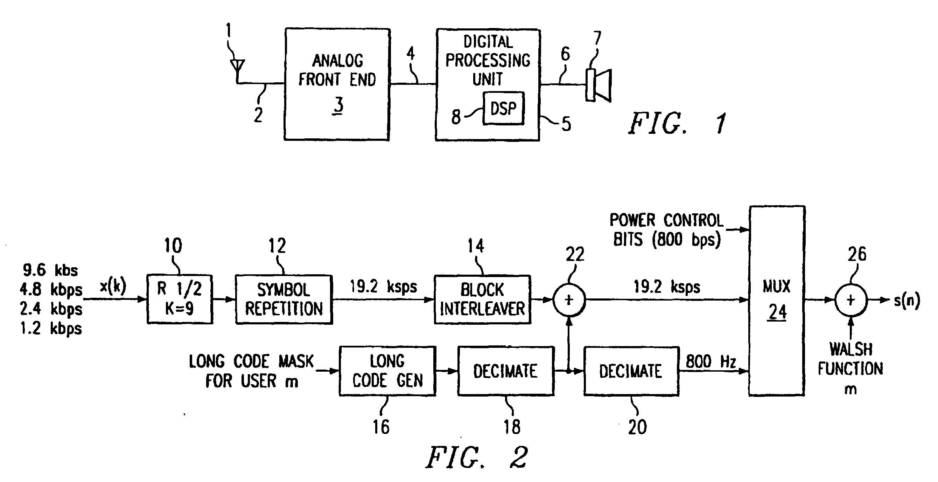

Figure 1 is a high level block diagram of a CDMA receiver, such as a receiver compatible with the IS-95 standard. An antenna 1 receives signals from the communications medium and sends those signals via a transmission line 2 to an analog "front end" receiver 3. The received signals are provided on line 4 to a digital processing unit 5 where they are digitized for further processing. Then, the desired signals are extracted from other signals received on antenna 1, and subjected to various known CDMA processing algorithms that, e.g., deinterleave, descramble, etc., and the resultant data stream of digitally encoded audio data is converted to analog audio data and provided on line 6 to a speaker 7 to be heard by a user of the receiver. The digital processing unit 5 typically includes a digital signal processor ("DSP") for executing code that implements one or more of the aforementioned algorithms. The present invention is implemented in code instructions executed on a DSP in the digital processing unit 5 of such a receiver. It provides an efficient method for determining the data rate of the digitally encoded audio data, which may be one of several different rates.

The preferred embodiment of the present invention utilizes a maximum a posteriori probability algorithm for detecting the source rate of such variable rate coded audio data. Such an algorithm uses a priori knowledge of the source rate probabilities. In the absence of a priori knowledge of the source probabilities the algorithm becomes a likelihood algorithm, where the decision requires calculating the likelihood of each source rate and choosing the maximum of these likelihoods. The MAP and likelihood algorithms used in embodiments of the present invention may be expressed in mathematical form, for clarity. However, these algorithms in the application of the present invention are methods implemented in instructions executed on a digital signal processor. Of course, supplemental special purpose hardware may also be employed for various steps in the execution of the algorithms, and still remain within the scope of the invention. Several modifications are presented herein that significantly improve the efficiency of their operation, greatly enhancing the suitability of the implementations for practical implementation on currently available, and reasonably priced digital computers including digital signal processors ("DSPs").

The preferred embodiment of the present invention, discussed hereinbelow, is intended for decoding of information encoded via either a QCELP-13 or an EVRC code. However, the invention can be applied with obvious modifications to other CODECs, once the principles set forth herein are understood. In addition, modifications may be made to the fundamental algorithms utilized in the application of the instant invention, by including information about other channel statistics, such as power control bits, and by combining the resulting algorithm with estimations of source rate probabilities. Also, a "hard" decision algorithm may provide further complexity reduction.

The IS-95 CDMA system employs variable rate voice coding in order to reduce the transmitted and received signal power, and thereby increase system capacity for both the forward and reverse links. Furthermore, in order to maintain high voice quality, the rate information is not transmitted to the receiver.

Figure 2 is a high level block diagram of a known IS-95 encoder, in which an 8 Kbps CODEC is used. An input stream of coded audio data x(k) (including overhead bits) is provided that may be at any of the rates 9.6 kbs, 4.8 kbs, 2.4 kbs or 1.2 kbs. These data rates are known as rate set 1. This encoded audio data x(k) includes cyclic redundancy code (CRC) bits and eight tail bits, as is known in the art. It is provided to a forward error correction block 10 that calculates and adds error correction bits to the data stream. The resulting stream is provided to a symbol repetition block 12. When the encoded audio data x(k) is at a rate lower than the maximum rate the symbol repetition block 12 repeats the code bits as necessary in order to provide a 19.2 k symbols per second bit rate into the next block, the block interleaver 14, regardless of the input rate. A long code generator 16, first decimator 18, second decimator 20, adder 22 and multiplexer 24 are used to scramble the output of the block interleaver 14 with a PN code, and puncture it with power control bits in the forward link bit stream for reverse link power control. The output of multiplexer 24 is used to modulate a Walsh code m at adder 26 to yield output data stream s(n).

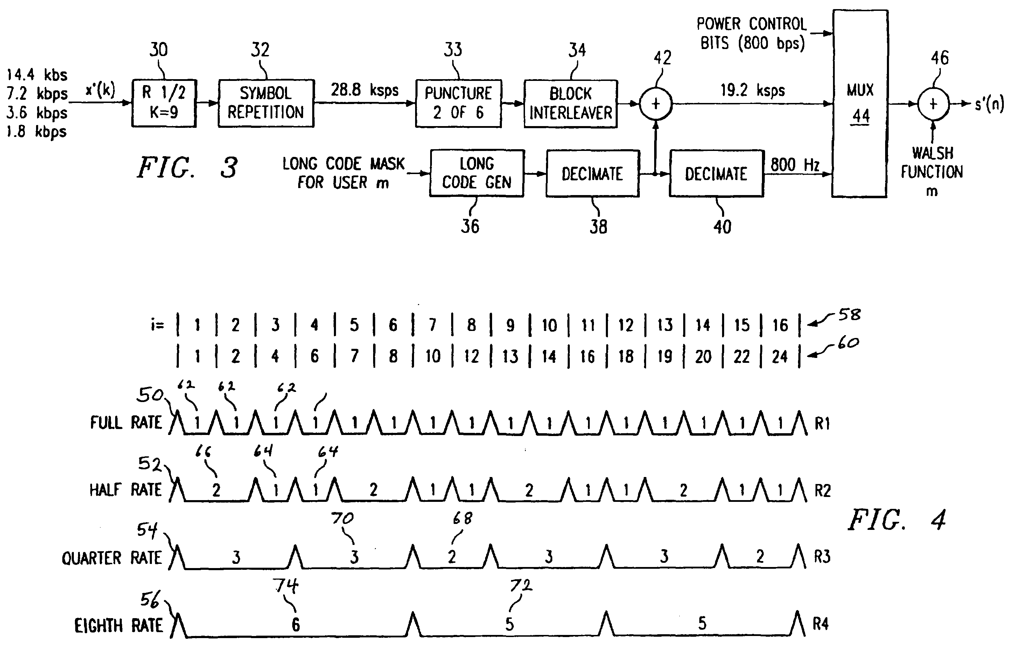

Figure 3 is a high level block diagram of a known IS-95 encoder, in which an 8 Kbps CODEC is used. It is similar to the encoder shown in Figure 2. An input stream of coded audio data x(k) is provided that may be at any of the rates 14.4 kbs, 7.2 kbs, 3.6 kbs or 1.8 kbs. These data rates are known as rate set 2. This encoded audio data x'(k) includes cyclic redundancy code (CRC) bits and eight tail bits, as is known in the art. It is provided to an R 1/2 forward error correction code block 30 that calculates and adds error correction bits to the data stream. The resulting stream is provided to a symbol repetition block 32. Then the encoded audio data x(k) is at a rate lower than the maximum rate the symbol repetition block 32 repeats the code bits as necessary in order to provide a 19.2 k symbols per second bit rate, regardless of the input rate, into the next block, a puncture unit 33 that punctures two of six in order to provide the required bit rate of 19.2 kbps for the Walsh function modulation, as in Figure 2. The next unit is a block interleaver 34. A long code generator 36, first decimator 38, second decimator 40, adder 42 and multiplexer 44 are used to scramble the output of the block interleaver 44 with a PN code, and puncture it with power control bits in the forward link bit stream for reverse link power control. The output of multiplexer 44 is used to modulate a Walsh code m in modulator 46.

Now, one consideration in the application of the method of the preferred embodiment of the present invention is to exploit structural aspects of the data stream being examined. For example, data coded in accordance with rate set 2 has a known tuple structure, resulting from repetitions required in the sending of lower rate data, and of puncturing required for matching the Walsh function chip rate when using rate set 2. Consider the tuples created in rate set 2, as a result of repetition, and taking into consideration puncturing, for a 24-bit sequence at each rate.

This is illustrated in Figure 4. Figure 4 is a diagram of the relative timings of rate set 2 data streams at different data rates, namely 14.4 kbs (full rate), 7.2 kbs (half rate), 3,6 kbs (quarter rate) and 1.8 kbs (eighth rate). One line, referred to hereinafter as a data line, is shown for each such data stream, namely, full rate R1 data stream 50, half rate R2 data stream 52, quarter rate R3 data stream 54 and eighth rate R4 data stream 56. For reference, the top row 58 in the diagram shows the power index i, corresponding to the data bit at the output of the error correction code block of Figure 3. The second row 60 shows a series of numbers that are an index into the code. The data groupings for the four coded data streams R1 - R4 can be thus seen relative to these indices 58, 60. The numbers appearing over each data line 50 - 56 represent the tuple structure for that data rate. Thus, it can be seen in Figure 3 that the R1 data stream 50 has only 1-tuples 62. The R2 data stream 52 has both 1-tuples 64 and 2-tuples 66. The R3 data stream 54 has 2-tuples 68 and 3-tuples 70. Finally, the R4 data stream 56 has 5-tuples 72 and 6-tuples 74.

The inventive embodiment exploits the statistical attributes of the coded information and, based on such attributes, applies a set of MAP decision rules. Four hypotheses are provided, one corresponding to each of the rates, and are denoted as follows:

| Hypothesis | Rate |
|---|---|
| $H_0 : r_1 = m1i + ni,$ | 13.35 kbps |
| $H_1 : r_i = m2i + ni,$ | 6.25 kbps |
| $H_2 : r_i = m3i + ni,$ | 2.75 kbps |
| $H_3 : r_i = m4i + ni,$ | 1.05 kbps |

where:

i=1, 2, ..., 384,
$r_i$ is the observation variable,
m is the received signal,
n is the noise associated with the received signal, and
i corresponds to the 384 bits at the output of the R 1/2 forward error correction code block 30 of Figure 3.

Assuming a priori probabilities are equally likely, i.e., $P_0 = P_1 = P_2 = P_3$, then, the decision rule requires calculation of the conditional probability P(R|Hi), and choosing the largest. Such an algorithm is known in the art as a likelihood algorithm. When considering the a priori source information the algorithm is a MAP algorithm, comprised of multiplying the conditional probability by the source rate probability to obtain p(R|Hi)p(Hi), and choosing the largest.

In the absence of a priori source information the algorithm becomes a likelihood algorithm.

Thus, for R1,

$$p(r_i|H_o, m1_i) = \frac{1}{\sqrt{2\pi}\sigma} \exp\left[\frac{-(r_i - m1_i)^2}{2\sigma^2}\right], i = 1, 2, ..., 384 \qquad \text{Eq. (1)}$$

where $\sigma^2$ = noise power. Equation (1) is given by known stochastic processes, and is the probability of a received signal in additive white Gaussian noise.

$$p_{m1} = 0.5\delta(m1+\alpha)+0.5\delta(m1-\alpha) \qquad \text{Eq. (2)}$$

Equation (2) expresses an assumption of equal probability of +1 and -1 for source bits. We define a source bit to occur at the output of a symbol repetition block. Note, however, that due to a typical communications medium the received signal energy is not precisely a +1 or a -1 voltage level, but some value which we will denote as $\alpha$. Therefore, in more precise terms we may say that Equation (2) models the equal probability of the received energy taking the values $+\alpha$ and $-\alpha$.

$$p(r_i|H_0) = \int_{ml=-\infty}^{\infty} p(r_i|H_0,m1)\, p_{m1}(m1)dm1 \qquad \text{Eq. (3)}$$

$$= \frac{0.5}{\sqrt{2\pi}\sigma} \exp\left[\frac{-(r_i-1)^2}{2\sigma^2}\right] + \frac{0.5}{\sqrt{2\pi}\sigma} \exp\left[\frac{-(r_i+1)^2}{2\sigma^2}\right], i = 1, 2, \dots, 384$$

Equation (3) is a formulation to eliminate $m1_i$ from the equation. It uses equations (1) and (2), and expresses the conditional probability $p(R|H_0)$.

For rate R2, the transmitted source bit energy corresponds to 1/2 with respect to R1. Therefore,
for 1-tuples:

$$p(r_1|H_i) = p(r_i|H_0) , i = 3, 4, 7, 8, 11, 12, \dots, 383, 384, \text{ with } \alpha \text{ replaced by } \frac{\alpha}{\sqrt{2}}. \qquad \text{Eq. (4)}$$

for 2-tuples:

$$\text{Eq. (5)} \quad p(r_i, r_{i+1}, m2_i, m2_{i+1} \mid H_1)$$

$$= \frac{1}{2\pi\sigma^2} \exp\left[\frac{-(r_i-m2_i)^2}{2\sigma^2}\right]\exp\left[\frac{-(r_{i+1}-m2_{i+1})^2}{2\sigma^2}\right] ,$$

$$m2_i = m2_{i+1} , \quad i = 1, 5, 9, 13, \dots, 381$$

$$= \frac{1}{2\pi\sigma^2} \exp\left[\frac{-(r_i-m2_i)^2-(r_{i+1}-m2_{i+1})^2}{2\sigma^2}\right] ,$$

$$= \frac{0.5}{2\pi\sigma^2} \quad \exp$$

$$\left[\frac{-(r_i - \frac{\alpha}{\sqrt{2}}) - (r_{i+1} - \frac{\alpha}{\sqrt{2}})}{2\sigma^2}\right] + \frac{0.5}{2\pi\sigma^2} \exp \frac{-(r_i + \frac{\alpha}{\sqrt{2}}) - (r_{i+1} + \frac{\alpha}{\sqrt{2}})}{2\sigma^2} \quad ,$$

$$i = 1, 5, 9, 13, \ldots, 381.$$

For rate R3, the transmitted source bit energy corresponds to 1/4 with respect to R1. Therefore, for 2-tuples:

$$p(r_i, r_{i+1}|H_2) = p(r_i, r_{i+1}|H_1) \, , \, i = 7, 15, \ldots, 383, \text{ with } \frac{\alpha}{\sqrt{2}} \text{ replaced by } \frac{\alpha}{2}. \qquad \text{Eq. (6)}$$

for 3-tuples:

$$\text{Eq. (7)} \qquad p(r_i, \, r_{i+1}, \, r_{i+2}|H_2)$$

$$= \frac{0.5}{(2\pi)^{3/2}} \sigma^3 \exp \left[\frac{-(r_i - \frac{\alpha}{2}) - (r_{i+1} - \frac{\alpha}{2}) - (r_{i+2} - \frac{\alpha}{2})}{2\sigma^2}\right]$$

$$+ \frac{0.5}{(2\pi)^{3/2}} \sigma^3 \exp \left[\frac{-(r_i + \frac{\alpha}{2}) - (r_{i+1} + \frac{\alpha}{2}) - (r_{i+2} + \frac{\alpha}{2})}{2\sigma^2}\right] \quad ,$$

$$i = 1, 4, 9, 12, \ldots, 380.$$

Finally, for rate R4, the transmitted source bit energy corresponds to 1/8 with respect to R1. Therfore, for 5-tuples:

$$\text{Eq. (8)} \qquad p(r_i, \, r_{i+1}, \ldots, \, r_{i+4}|H_3)$$

$$= \frac{0.5}{(2\pi)^{5/2}} \sigma^5 \exp\left[\frac{-\sum_{j=0}^{4}(r_{i+j} - \frac{1}{\sqrt{8}})}{2\sigma^2}\right] + \frac{0.5}{(2\pi)^{5/2}} \sigma^5 \exp\left[\frac{-\sum_{j=0}^{4}(r_{i+j} + \frac{1}{\sqrt{8}})}{2\sigma^2}\right]$$

for 6-tuples:

Eq. (9)  $p(r_i, r_{i+1}, ..., r_{i+5}|H_3)$

$$= \frac{0.5}{(2\pi)^3} \sigma^6 \exp\left[\frac{-\sum_{j=0}^{5}(r_{i+j} - \frac{1}{\sqrt{8}})}{2\sigma^2}\right] + \frac{0.5}{(2\pi)^3} \sigma^6 \exp\left[\frac{-\sum_{j=0}^{5}(r_{i+j} + \frac{1}{\sqrt{8}})}{2\sigma^2}\right] ,$$

i = 7, 12, …, 380.

The likelihood functions are formed from the respective probability functions. In so doing, the terms involving $(2\pi)$ and $\sigma$ which multiply each exp function may be dropped since their effect is an equal scaling, for each of the likelihood functions. Note that the $\sigma^2$ inside the exp( ) may not be dropped. The likelihood functions are given by:

$$\ell_0 = \prod_{i=1}^{384} p(r_i|H_0)$$

$$\ell_1 = \prod_{I_{1,1}} p(r_i|H_1) \prod_{I_{1,2}} p(H_2|r_i, r_{i+1})$$

$I_{1,1} = \{i: 3, 4, 7, 8, 11, 12, ... , 383, 384\}$
$I_{1,2} = \{i: 1, 5, 9, 13, ... , 321\}$

$$\ell_2 = \prod_{I_{2,2}} p(1r_i, r_{i+1}|H_2) \prod_{I_{2,3}} p(r_i, r_{i+1}, r_{i+2}|H_2)$$

$I_{2,2} = \{i: 7, 15, ... , 383\}$
$I_{2,3} = \{i: 1, 4, 9, 12, ... , 380\}$

$$\ell_3 = \prod_{I_{3,5}} p(r_i, ..., r_{i+4}|H_3) \prod_{I_{3,6}} p(r_i, ..., r_{i+5}|H_3)$$

$I_{3,5} = \{i: 7, 12, \dots, 380\}$

$I_{3,6} = \{i: 1, 17, \dots, 369\}$

where p' corresponds to the $(2\pi)$ and $\sigma$ terms.

Derivation of these likelihood functions has up to now eluded the art. Thus, this invention provides for the first time a set of likelihood functions from which to make a rate decision. The decision rule requires calculation of the likelihood functions $I_0$, $I_2$, $I_2$ and $I_3$, and choosing the largest, where the largest corresponds to the most likely transmitted data rate. These likelihood functions may be simplified to provide a more efficient implementation. Among the advantages provided by this invention is that, appropriately exploited in accordance with the principles set forth herein, these functions may be utilized to provide an optimum MAP performance bound for any suboptimum technique based on the tuple structure.

One variation for implementation is the implementation of a look-up table for exp ( • ). Then, each of the likelihood functions reduces to calculating the argument to the exp ( ) functions, combining appropriately, and summing. It is important to note that this detection algorthim requires knowledge of the received bit energy value $\alpha$. This will require an additional estimation step, which may be done by any of the known techniques.

Modified MAP Detection Algorithm

Since a direct implementation of the likelihood or MAP detection rule may be overly complex, sub-optimal approaches that require less computational complexity may be considered preferred in certain application environments. One such algorithm results from a detection scheme based on estimation of the means $m_{j_i}$, j = 1, 2, 3, 4, and j = 1, 2, ..., 384. The hypotheses are as before, however the likelihood functions are constructed based on the probabilities conditioned on the $m_{j_i}$'s. These hypotheses are implemented by using estimates $m_{j_i}$ for the observation variable means.

$$\ell'_0(R,M) = \prod_{i=1}^{384} p(r_1 | H_0, m_i)$$

$$\ell'_1(R,M) = \prod_{I_{1,1}} p(r_i | H_1, m_i) \prod_{I_{1,2}} p(r_i, r_{i+1} | H_1 m_i)$$

$$\ell'_2(R,M) = \prod_{I_{2,2}} p(r_i, r_{i+1} | H_2, m_i) \prod_{I_{2,3}} p(r_i, r_{i+1}, r_{i+2} | H_2 m_i)$$

$$\ell'_3(R,M) = \prod_{I_{3,5}} p(r_i, \dots r_{i+4} | H_3, m_i) \prod_{I_{3,6}} p(r_i, \dots r_{i+5} | H_3, m_i)$$

These equations are implemented by using the estimate $\hat{m}_{j_i}$, for the observation variable mean. Essentially, the embodiment disclosed herein involves not only estimating $\alpha$ as before, but the sign (positive or negative) corresponding to the transmitted bit.

The resulting test based on these likelihood functions is fundamentally different than the previous test. First, since the p( )'s are exponential functions (i.e. not a sum of exponentials as in the previous case), they can be simplified by taking the natural logarithm. The end result is a test with a greatly simplified computational complexity. Second, estimation of the sign of $\alpha$ will endure some errors, especially since estimation of the sign of a is made without benefit of the error correction code.

We can simplify the likelihood functions by taking the natural logarithm as shown, for example on $\ell'_3$:

$$\ell'_3 \;=\; \prod_{I_{3,5}} \exp\left[ \frac{-\sum_{j=0}^{4}(r_{i+j} - \hat{m}4_i)^2}{2\sigma^2} \right] \prod_{I_{3,6}} \exp\left[ \frac{-\sum_{j=0}^{54}(r_{i+j} - \hat{m}4_i)}{2\sigma^2} \right]$$

taking ln( )

$$\Lambda'_3 = \sum_{I3,5}\left[ -\sum_{j=0}^{4}(r_{i+j} - \hat{m}4i)^2 \right] + \sum_{I3,6}\left[ -\sum_{j=0}^{5}(r_{i+j} - \hat{m}4i)^2 \right]$$

The sign can be changed, which will reverse the inequality in the hypothesis test. The test becomes compute:

$$\Lambda_3 = \sum_{I3,5}\left[ \sum_{j=0}^{4}(r_{i+j} - \hat{m}4i)^2 \right] \sum_{I3,6}\left[ \sum_{j=0}^{5}(r_{i+j} - \hat{m}4i)^2 \right]$$

$$\Lambda_2 = \sum_{I2,2}\left[ \sum_{j=0}^{1}(r_{i+j} - \hat{m}3i)^2 \right] \sum_{I2,3}\left[ \sum_{j=0}^{2}(r_{i+j} - \hat{m}3i)^2 \right]$$

$$\Lambda_1 = \sum_{I1,1}\left[ \sum(r_i - \hat{m}2i)^2 \right] \sum_{I1,2}\left[ \sum_{j=0}^{1}(r_{i+j} - \hat{m}2i)^2 \right]$$

and compute the smallest, where the smallest corresponds to the most likely rate.

In this case, calculation of the log-likelihood reduces to a summation of observation variables.

Rate Detection

The pcc hits can be incorporated into the likelihood function. Important to realize is that given a particular rate, there is a static relationship between the energy of the traffic versus pcc symbol. Thus:

$$p(r|H_i, E_T, \sigma^2)$$
$$= p(r_T, r_{pcc}|H_i, E_T, \sigma^2)$$
$$= p(r_T |H_i, E_T, \sigma^2) \cdot p(r_{pcc}|H_i, E_T, \sigma^2)$$

where

$$p(r_{pcc}|H_i, E_T, \sigma^2) = \prod_{m=1}^{M} p(rm_{pcc}|H_i, E_T, \sigma^2)$$

$$= \frac{1}{2}N(\sqrt{E_T},\sigma^2)+\frac{1}{2}N(-\sqrt{E_T},\sigma^2)\ H_1$$

$$= \frac{1}{2}N(\sqrt{2E_T},\sigma^2)+\frac{1}{2}N(-\sqrt{2E_T},\sigma^2)\ H_2$$

$$= \frac{1}{2}N(\sqrt{4E_T},\sigma^2)+\frac{1}{2}N(-\sqrt{4E_T},\sigma^2)\ H_3$$

$$= \frac{1}{2}N(\sqrt{8E_T},\sigma^2)+\frac{1}{2}N(-\sqrt{8E_T},\sigma^2)\ H_4$$

$$N(m, \sigma^2)=\frac{1}{\sqrt{2\pi\sigma^2}}e^{\frac{-(r-m)^2}{2\sigma^2}}$$

It is assumed that all pcc symbols are sent with "full-rate" energy, if the MS is translating at lower rates. It is actually unnecessary to make this assumption, but if this assumption were true, performance would be even better. If the invalid pcc symbols are not at "full-rate" energy they are ignored. In 384 symbols, there are 32 pcc symbols @ the different rates, once would have {32, 16, 8, 4} pcc symbols.

A refinement assumes that pcc symbols come in pairs. Thus,

$$p(r_{pcc}|H_i,\ E_T,\ \sigma^2)\ =\ \prod_{m=1,3,5,...} p(r^i_{pcc},r^{i+1}_{pcc}|H_i,\ E_T,\ \sigma^2)$$

$$= \begin{cases} \prod \frac{1}{2}N(\sqrt{E_T},\sqrt{E_T},\sigma^2)+\frac{1}{2}N(-\sqrt{E_T},-\sqrt{E_T},\sigma^2) & H_1 \\[2em] \prod \frac{1}{2}N(\sqrt{2E_T},\sqrt{2E_T},\sigma^2)+\frac{1}{2}N(-\sqrt{2E_T},-\sqrt{2E_T},\sigma^2) & H_2 \\[2em] \prod \frac{1}{2}N(\sqrt{4E_T},\sqrt{4E_T},\sigma^2)+\frac{1}{2}N(-\sqrt{4E_T},-\sqrt{4E_T},\sigma^2) & H_3 \\[2em] \prod \frac{1}{2}N(\sqrt{8E_T},\sqrt{8E_T},\sigma^2)+\frac{1}{2}N(-\sqrt{8E_T},-\sqrt{8E_T},\sigma^2) & H_4 \end{cases}$$

$$N(m_1,m_2,\sigma^2)=\frac{1}{2\pi\sigma^2}e^{-\left[\frac{(r_1-m_1)^2}{2\sigma^2}+\frac{(r_2-m_2)^2}{2\sigma^2}\right]}$$

Hard decision likelihood/MAP rate detection method.
For rate set R1,

$$hd = sgn(r) = \{\pm 1, \pm 2,...\}$$

$H_1$:

$$p(hd) = \prod_{i=1}^{384} p(hd(i)|p_1)$$

$$p(hd(i)|p_1) = \frac{1}{2}p_1 + \frac{1}{2}(1-p_1)hd = 1$$
$$= 1/2 \qquad hd = -1$$

$H_2$:

$$p(hd) = \prod_{i=1,3,5,...}^{384} p(hd(i), hd(i+1)|p_2)$$

$$p(hd(i), hd(i+1)|p_2) = \frac{1}{2}((1-p_2)(1-p_2)) + \frac{1}{2}p_2 p_2$$

$hd(i) = 0, hd(i+1) = 0$
$$= \frac{1}{2}((1-p_2)p_2) + \frac{1}{2}((p_2)(1-p_2))hd(i) = 0, hd(i+1) = 1$$
$$= \frac{1}{2}(p_2(1-p_2)) + \frac{1}{2}((1-p_2)p_2) \; hd(i) = 1, hd(i+1) = 0$$
$$= \frac{1}{2}(p_2 p_2) + \frac{1}{2}((1-p_2)(1-p_2)) \; hd(i) = 1, hd(i+1) = 1$$

$$\text{where } \frac{1}{2}((1-p_2)(1-p_2)) = ((1-2p+p^2)/2$$
$$= \frac{1}{2} - p - p_2^2$$

$H_3$:

$$p(\text{hd}) = \prod_{i=1,5,9,\dots}^{384} p(hd(i), hd(i+1), hd(i+2), hd(i+3) \mid p_3)$$

$$p(hd(i), hd(i+1), hd(i+2), hd(i+3) \mid P_3) =$$

$$\begin{cases} = 2\left[\dfrac{1}{2}((1-p_3)^4) + \dfrac{1}{2}p_4^3\right] & 4 - 0\text{'s} \\[2em] = \left\{ 8\left[\dfrac{1}{2}((1-p_3)^3 p_3) + \dfrac{1}{2}((1-p_3)p_3^3)\right]\right\} & \begin{matrix} 3-0\text{'}s \\ 2-0\text{'}s \\ 1-0\text{'}s \end{matrix} \\[2em] = 6\left[\dfrac{1}{2}(1-p_3)^2 p_3^{\,2} + \dfrac{1}{2}(1-p_2)^2 p^2\right] & 0 - 0\text{'s} \end{cases}$$

$$\longrightarrow \quad = \dfrac{1}{2}\left[(1-p_3)^k p_3^{4-k} + (1-p_3)^{4-k} p_{3,}^k\right] \text{ where } k = \#\text{ of } 0\text{'s}$$

where k = number of zeros

$H_4$:

$$p(\text{hd}) = \prod_{i=1,9,17,\dots} p(hd(i),\dots,hd(i+7)/p_4)$$

$$p(hd(i),\dots,hd(i+1)|p_4) = \dfrac{1}{2}[(1-p)^k p_4^{8-k} + (1-p_4)^{8-k} p_4^k]$$

where k = number of zeros.
In the foregoing:

```
                    1  2  1                        2
       1  3  3  1
                       1  4  6  4  1                4
    1  5  10  10  5  1
              1  7  21  35  35  21  7  1        6
                          8  0s        ⌐
                          7  0s        ⌐|
                          6  0s      ⌐| |
                          5  0s    ⌐| | |
                          4  0s −  || |       | }  8
                          3  0s    ⌐| | |
                          2  0s      ⌐| |
                          1  0s        ⌐|
                          0  0s         ⌐
```

Although the present invention and its advantages have been described in detail, it should be understood that various changes, substitutions and alterations can be made herein without departing from the spirit and scope of the invention as defined by the appended claims.

**Claims**

1. In an electronic system, a method for determining the data rate of blocks of encoded data, wherein each block of the encoded data may have one of a plurality of data rates, comprising the steps of:

   representing an observation variable of said encoded signals as digital values;
   providing a set of likelihood functions from the observation variable, each one in the set corresponding to a hypothesis, wherein each hypothesis represents one of the possible data rates, and wherein the likelihood functions are related to the occurrence of each of the hypotheses; and
   applying said set of likelihood functions, using said digital values as data for said likelihood functions to determine a data rate for said encoded data.

2. A method in accordance with Claim 1, wherein said set of likelihood functions is provided as a set of instructions for a digital signal processor ("DSP"), and wherein said step of applying said set of likelihood functions is performed by executing said instructions on said DSP.

3. A method in accordance with Claim 1, wherein said set of likelihood functions is provided as hard wired circuitry in an integrated circuit, and wherein said step of applying said set of likelihood functions is performed by providing said digital values to said circuitry, and causing said circuitry to function.

4. A method in accordance with Claim 1, wherein

   signals are detected in which said encoded data is encoded, said detected signals being represented as digital values for an observable value of said detected signals determined at each of a continuing sequence of times;
   instructions are provided implementing said set of likelihood functions for said encoded data, the probabilities for the occurrence of said encoded data at said one of said plurality of data rates being provided using a predetermined estimated hypothesis for the occurrence of said observable variable; and

a DSP is used to execute said instructions, using said digital values as data for said instructions, to determine a data rate for said encoded data.

*FIG. 1*

*FIG. 2*

FIG. 3

FIG. 4